# EUROPEAN PATENT APPLICATION

(11) **EP 1 326 375 A1**
(43) Date of publication of application: **09.07.2003**
(21) Application number: 02360006.7
(22) Date of filing: 08.01.2002
(51) Int. Cl.: H04L 12/24, H04Q 3/00

(54) **Restoration system**

(71) Applicant: ALCATEL, 75008 Paris (FR)
(72) Inventor: Weis, Bernd X., Dr., 70825 Korntal (DE)
(74) Representative: Urlichs, Stefan, Dipl.-Phys.

(57) **Abstract**

A Network restoration device for restoring static paths in a transmission network upon occurrence of a failure, the restoration device comprising means for retrieving an initial configuration of said transmission network from a central network managing device, means for tracking the current network status by tapping messages on a communication path between said network managing device and network elements, duplicating said messages, and evaluating them, means for detecting a failure to be restored by evaluating alarm messages, means for taking over control over the network from said network managing device upon detection of a failure, means for evaluating a restoration configuration of said transmission network and for restoring failed paths by deploying said restoration configuration, and means for informing said network managing device of the restoration configuration.

## Description

### Field of the invention

The present invention relates to communications environments and networks and in particular to solutions for enhanced restorations of communications environments and networks to compensate failures of communications paths.

### Background of the invention

Restorable communications environments and networks impose severe time constraints on the management of communications paths and links . Currently there are two solutions for a path restoration in communications environments and networks based on so-called regional managers and restoration managers. Although regional managers provide some kind of restoration, such restorations do not fulfill general timing requirements. Further, restoration managers in general only allow restorations to cross connect networks.

### Object of the Invention

The object of the present invention is provide for enhanced solutions to restore communications environments and networks in particular with respect to time constraints required to reestablish operable and functioning paths in a communications environment and network.

### Short description of the invention

The object underlying the present invention is solved by a restoration system for restoring a communications network or environment comprising communications paths and network elements which communicate via the communications paths. In normal operation, the network or environment is controlled by a network managing unit, e.g. a regional manager, at least with respect to communications from and to network elements.

The restoration system comprises a unit for detecting failures in the network to be restored by evaluating alarm communications in the network. This unit can be referred to as alarm analyzer.

The restoration system further comprises a unit for controlling the network upon detection of a failure. In particular, the control unit controls the network during the restoration for which it is contemplated that the control unit at least partially takes over control of the network from the network managing unit. Upon an at least partially completion of the restoration, the control unit releases at least partially control of the network to the network managing unit in dependence of the restoration process required, the actual network design, control functions of the network managing unit and the like. This unit can also be referred to as network element commands generator.

The restoration system further comprises a unit for restoring failed paths by deploying a restoration configuration for the network. This unit can be referred to as configuration manager and configuration database.

In order to supervise a current situation of the network and in particular of the communications paths and network elements, the restoration system can include a unit for monitoring the current network status on the basis of communications in the network. Here, it is possible that the monitor unit duplicates communications in the network, wherein monitored communications can be forwarded or bypassed to a respective destination by the restoration system.

Preferably, the failure detection unit detects the failure on the basis of communications monitored by the monitoring unit.

In order to consider an configuration actually employed in the network in particular with respect to communications paths used, not used, available, not available and the like, the restoration system can comprise a unit for retrieving a current configuration of the network, e.g. from the network managing device.

To obtain a self-contained solution, the restoration system and in particular the restoring unit evaluates, generate or computes the restoration configuration, preferably on the basis of the current network configuration.

Since the restoration system is contemplated only to be "network active" for restoration purposes, a unit can be included to communicate the restoration configuration to the network managing unit. On the basis of such information, the network managing unit is enabled to further control the network in view of a network configuration resulting from a restoration process.

Further, the present invention provides a restoration method for restoring a communications network, a restorable communications network, a computer program product for restoring a communications network.

### Short description of the figures

In the following description of preferred embodiments of the present invention it is referred to the accompanying drawings wherein:
- Fig. 1: illustrates a network environment according to the present invention,
- Fig. 2: illustrates a restoration system according to the present invention,
- Fig. 3: illustrates a network used for the present invention,
- Fig. 4: illustrates a relationship between physical and logical entities used for the present invention, and
- Fig. 5: illustrates a TP hierarchy used for the present invention.

### Description of preferred embodiments

### GENERAL OBSERVATIONS

The following description is given with respect to a communications environment including a SDH (Synchronous Digital Hierarchy) network, wherein terms and abbreviations commonly known for SDH are used. Nevertheless, the principles and solutions disclosed here apply also for any kind of networked environment wherein failures, faults and other conditions affecting the operation and operability of the environment need to be compensated in particular under time constraints.

In general, a task of the restoration system is to restore a network within a time period required. In order to enhance restoration of communications networks and environments, the restoration systems provides for an improved restoration speed. In particular, the restoration system becomes only effective in case of a restoration requiring event, performs a respective restoration and suspends itself when the restoration has been completed.

A scenario describing functionalities of the restoration system can be summarized as follows:

The restoration system is provided a current environment configuration, e.g. a current topology of a network, established and available communications links etc. For example, the restoration system initially receives or requests respective data from a regional manager (RM).

The restoration system monitors the current status and conditions of the environment or parts thereof the restoration system is associated to. This can be accomplished by tracking or monitoring communications to and from the associated regional manager, e.g. with at least one of the network and network elements. For example, such a supervision of at least parts of the environment can be effected by duplicating communications (data, messages, requests, information, ...) in the environment and evaluating the duplicates.

In the case of an event requiring a restoration in the environment, e.g. of one or more network elements, the restoration system controls at least the affected parts of the environment and network elements, respectively. Further, the restoration system denies, at least partially, control at least of the affected parts of the network and network elements, respectively, by the associated regional manager.

The restoration system restores the affected parts of the environment and network elements, respectively.

Having performed restoration measures, the restoration system informs the associated regional manager of results of performed restoration measures with respect of a compensation of the event requiring restoration. After a restoration process, the restoration manager returns to a normal operational mode wherein the associated regional manager performs its control and communications functions defined for a normal operation of the environment and the restoration systems performs the above monitoring function.

In general, the restoration system is contemplated to be a separate unit potentially executing in the vicinity of the regional manager to provide ease of interaction. However, the restoration system can be integrally implemented as unit of another part of the environment. For example, the restoration systems can be embodied as unit of the associated regional manager. Due to the complexity of communications environments and its parts, e.g. the regional manager, the following requirements can be imposed on the restoration system:
- The restoration system should be based on a self-contained unit.
- The restoration system should minimize communications and interactions with other environment components and in particular with the associated regional manager.
- The restoration system should minimize requirements onto the environment and in particular to the regional manager, e.g. in order to reduce modifications of the environment and in particular of the regional manager.
- The restoration system should provide for a resilience with respect to the operating system of the environment or at least of the associated regional manager.

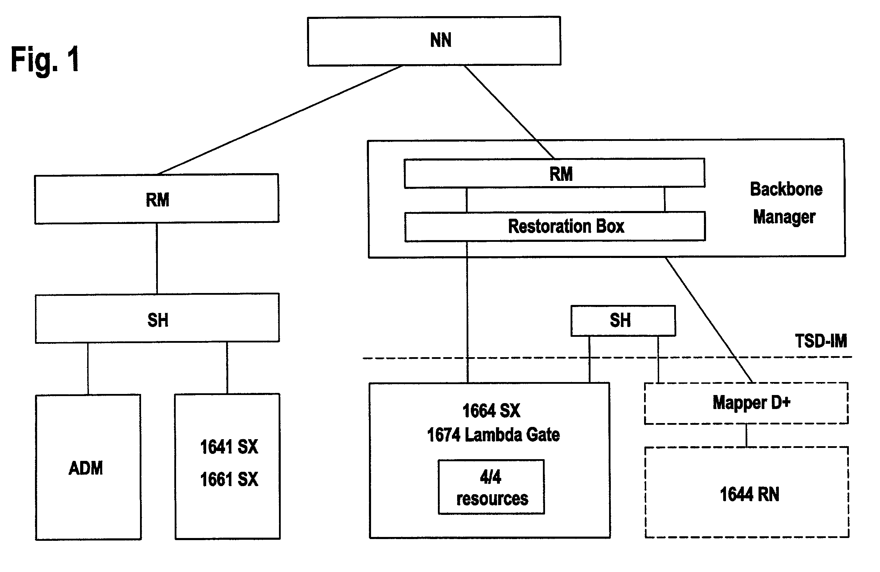

On the basis of such requirements system, a general architecture of a restorable environment as shown in Fig. 1 can be designed.

It is assumed that there are reserved spare network resources sufficient to complete a restoration. However, due to some defined connection prioritization scheme low priority traffic may be released to allow for traffic with higher priority if spare network resources are not sufficient to fully complete a restoration.

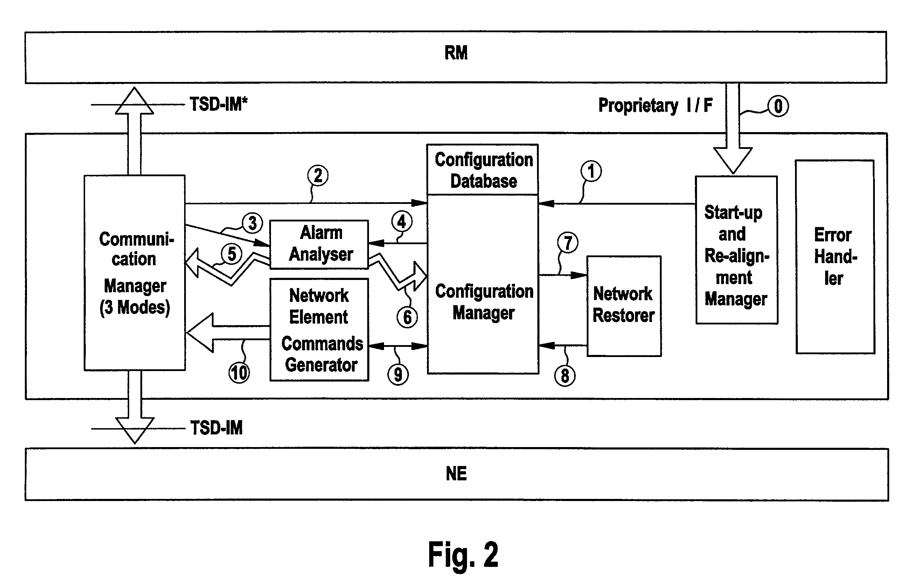

The restoration system as used in the environment shown in Fig. 1 comprises units as illustrated in Fig. 2:

A communication manager monitors communications between an associated regional manager RM and network element(s) NE as well as manages communications between the restoration system and network element(s) NE and the regional manager RM, respectively.

An alarm analyzer analyses alarms of network element(s) NE and determines the occurrence of an event requiring restoration.

A configuration manager and configuration database maintain and provide information concerning network configurations and communications paths and links.

A network restorer finds and provides new communications paths and links within the communications environment in the case of a restoration event.

A network elements command generator compiles the commands to network element(s) affected by the event requiring restoration.

A start-up and re-alignment manager initially loads the restoration system database with regional manager data and periodically checks these data to ensure a consistent view of the network for the regional manager RM and the restoration system.

An error handler deals with errors and exception occurring in the course of network management.

The main advantage of the present invention is a separation of tasks for restoration and tasks from normal network management. The separation allows to de-couple the physical computational platform if necessary, e.g. for optimal cost adaptation.

In order to enhance stability, failure compliance and the like, each of these units are essentially self-contained.

### DESCRIPTION OF OPERATIONS AND FUNCTIONS OF THE RESTORATION ENVIRONMENT

In the following, the units shown in Fig. 2 are described in greater detail. Terms or names of variables and parameters for a software implementation of functions of the restoration system are already used in the description of the restoration system units and will be presented in a subsequent description of exemplary data structures used for operations and functions of the restoration system.

The start-up manager gets relevant data from the regional manager at a start-up of the restoration system. The start-up manager sets up SDHNetwork data structures from data obtained from the regional manager. Such data can include:
- Topological information (SDHNetwork, PhysicalLink, NetworkElement)
- TP hierarchy information (ElOptTP, RSTP, MSTP, AU4TP)
- List of all communications paths and links established (PathInformation, CrossConnection, LinkConnection)

The start-up and re-alignment manager initializes the restoration system configuration data base. Furthermore, it periodically checks current restoration system data against regional manager data and eventually re-aligns restoration system and regional manager databases wherein the regional manager data base is the master data base.

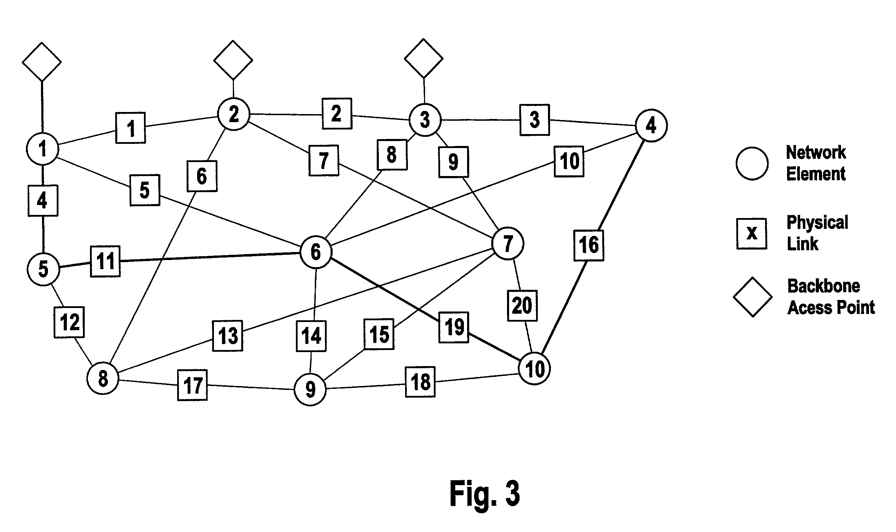

Information for the start-up and re-alignment manager can include a list of network elements and a list of physical links between network elements, a set of network elements in the network, a set of physical links in the network, a set of backbone access points to the network and the like. Such information provide for a characterization of the network an example for which being shown in Fig. 3.

Further, the start-up and re-alignment manager can be provided with information concerning current network element status which can be indicated by physical links connected to network element, sets of cross connections established in network elements, sets of administrative units still available to establish cross connections, sets of backbone access point TP's where restorable paths enter or leave the backbone network, respectively.

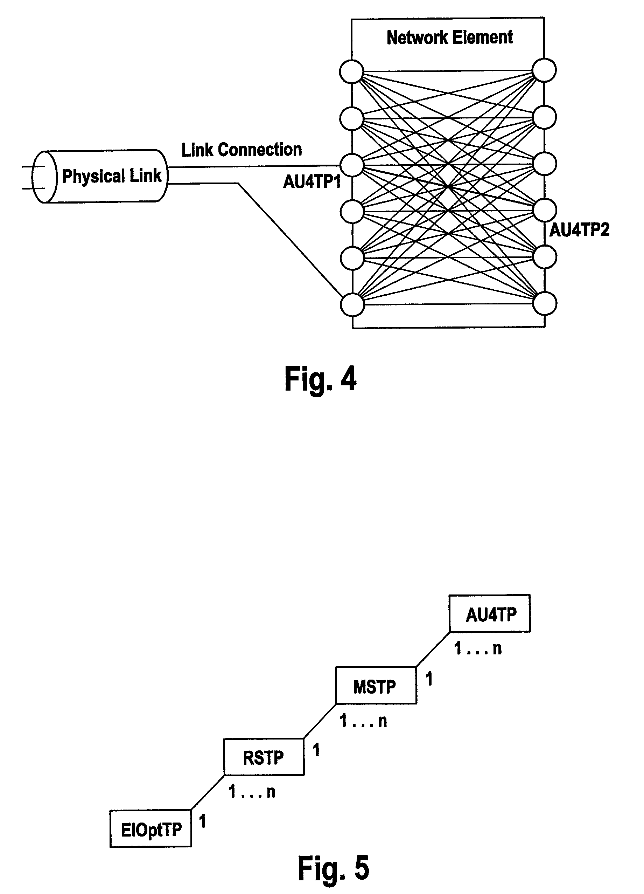

As shown in Fig. 4, a physical link - once established - provides a pool of link connections that can be used for path establishment, wherein link connections are established when the physical link is established. The number of link connections, each of which represents one AU4 transmission unit for an SDH network, is determined by the capacity of the physical link, e.g. a STM-16 physical link supplies 16 link connections. Furthermore, a link connection is connected to a AU4TP in each network element to which the physical link is associated.

The communications manager manages communications between regional manager, network and restoration system. The communications manager has three operational modes:
- Normal mode
- Restoration mode
- Finalization mode

The standard mode is the normal mode. In case of an restoration event the communications manager switches to restoration mode and remains in this mode until the end of network restoration. Then, the finalization mode is entered until the network is restoration alarm stable, i.e. the network has stopped issuing alarms which result from the corresponding restoration event.

In normal mode, messages from the regional manager to network elements and vice versa are copied and relayed to the intended destination. Copies of the messages are forwarded to the configuration manager or alarm analyzer, respectively.

In restoration mode, the regional manager is informed of the restoration event. To ensure network and regional manager consistency, two options can be defined:

As a first option, the regional manager defers user requests with impact on the restoration. As a second option, the restoration system negatively acknowledges all regional manager requests. A detailed description thereof is given at the end of this section

In general, messages from network elements to the regional manager are deferred until the end of network restoration. Here, it is contemplated that certain management functions for the network elements can still be executed, e.g. management functions not involved in the restoration process. Messages from network elements to the regional manager (e.g. alarms) related to the restoration process are processed by the restoration system which decides whether the regional manager needs to know about this alarm. If the regional manager requests are time supervised this supervision should be suspended while the network is restored.

When the restoration system configures network elements, these messages are communicated to network elements as well as to the regional manager. When all DXCs acknowledge their respective new configuration, the restoration is finished

In restoration mode, the restoration system filters the notifications and requests from the regional manager related to the backbone network and network elements and forwards relevant messages to alarm analyzer and configuration manager. In the case the regional manager itself is subjected to a restoration, such a filtering is generally not necessary as usually no regional manager requests and notifications are present.

For a restoration, requests can be generated by the restoration system which specify a sequence of TPs to be connected resulting in a reply specifying a sequence of TPs connected and a DN for each cross connection (connect request) and which specify a sequence of cross connection DNs to be disconnected resulting in a reply specifying a sequence of cross connection DNs disconnected (disconnect request).

In restoration mode, alarms from network elements which can be considered by the restoration system include at least LOS alarms, e.g. at a port serving a restorable VC-4 path, TIM alarms of a restorable VC-4 path and AIS alarms of some TPs. Such alarms can be stored for further processing when restoration is finalized.

In finalization mode, the regional manager is informed of the finalization of network restoration. In this mode the restoration system behaves like in normal mode except alarms from at least one network element indicate a failed restoration, e.g. a TIM of a restored VC-4 path.

The finalization mode is time controlled because it is starved off. After time-out the communications manager returns to normal mode.

The configuration manager maintains the configuration database and provides the alarm analyzer and network restorer with configuration information. Here, information and data can be employed which are indicative of the operational mode of the configuration manager, paths to be restored, restored paths, existing cross connections, cross connections to be deleted, cross connections to be connected and the like.

In normal mode, the configuration manager maintains the configuration database and provides the alarm analyzer and network restorer with configuration information.

The configuration manager updates the configuration database and maintains a record of the restoration events, e.g. a record of path exchanges for a roll back to the initial configuration which an be accomplishes by respective requests.

A connect request can be used which specifies a sequence of TPs to be connected resulting in a reply specifying a sequence of TPs connected and a DN for each cross connection. Each connect request corresponds to a path to be established. Therefore, the configuration manager tracks the connect request AU4TPs and finds corresponding link connections. Here, it has to be considered that identical link connections can indicate linked cross connections.

Further, a disconnect request is possible which specifies a sequence of cross connection DNs to be disconnected resulting in a reply specifying a sequence of cross connection DNs disconnected. Each disconnect request corresponds to a path to be disconnected.

A protect-unprotect request can specify sequences of TPs to be (un)protected connected resulting in a reply specifying a sequence of TPs (un)protected connected.

A protected-connect request can specify a sequence of TPs to be protected connected resulting in a reply specifying a sequence of TPs protected connected.

Moreover, a request for obtaining information with respect to port configurations can utilized.

In addition, the configuration manager provides the alarm analyzer with configuration data and rolls back when a link is up again, wherein the latter function can be an automatic or a forced process.

Upon a restoration requiring event, the configuration manager switches to restoration mode, wherein the configuration manager allows the network restorer access restoration information which provides an analyzed view of the current network. Such information can include all paths affected by the event sorted according to their priority. On the basis of information characterizing the physical network, the network restorer calculates a set of new physical paths from the data indicating paths to be restored and returns data indicative of restored paths and data indicative of un-restored paths.

For each restored path, the configuration manager provides for a link connection, e.g. via a request to get an available link connection, generates information indicative of a respective established path including corresponding link connections and updates data concerning the rollback functionality. From the link connections TPs, corresponding cross connections in nodes can be computed. Further, on the basis of information with respect to restored paths, information characterizing cross connections to be deleted and to be created are used to update the configuration data base. Here, it is contemplated to bundle update information per network element.

The alarm analyzer analyses incoming alarms whether they are a result of an event requiring restoration of network elements. In the case of an event requiring for restoration, the alarm manager puts the communication manager and configuration manager in restoration mode, detects physical links which are not operational based on the network configuration in the configuration database and indicates restoration to the configuration manager.

The alarm analyzer responses to alarms from network elements such as LOS alarms, e.g. at a port serving a restorable VC-4 path, TIM alarms, e.g. of a restorable VC-4 path and AIS alarms of some TP's.

The task to generate a list of path(s) to be restored is assigned to the alarm analyzer for the case of more complex alarm situations where fault detection is more tedious (e.g. AIS correlations).

The network restorer reconfigures the network based on the configuration database. On the basis of the above described restoration information and information indicating paths to be restored, the network restorer computes information characterizing restored physical paths and generate data concerning paths which cannot be restored.

Furthermore, the network restorer is contemplated to compute paths under constraints such as semi-manually routed paths, paths passing through pre-determined network elements and the like.

The network element commands generator generates commands to network elements involved in the restoration process, e.g. connects cross connections via connect processes, disconnects cross connections via disconnect processes and informs the configuration manager in order to update the database.

Further, the network element commands generator generates notifications to the regional manager, e.g. information for cross connection releases, creates new cross connections and informs the configuration manager of resulting responses.

In the case of more than one event requiring restoration, it can be evaluated whether the events are correlated or not, e.g. whether a path or network element is affected by both events.

If possible, at least parts of the restoration for the underlying events can processed as one restoration process. For example, a at least partially commonly performed restoration can be initiated when the configuration manager, the network restorer and network element commands generator can be reset to allow for the specific situation before the network element commands generator issues a first configuration message to a network element in response to one of the events requiring restoration. Otherwise, restorations for different events have to be handled separately, e.g. sequentially.

To ensure that the network is actually restored, the handling of multiple events requiring restoration can be time controlled to avoid excessive timing.

In the case the network does not provide for spare resources sufficient to successfully complete a restoration, e.g. a path can not be established, it is possible to release low priority traffic to allow for traffic with higher priority to be routed.

The regional manager provides, as described above, information for the start-up and re-alignment manager to initially "load" the restoration system. Information from the regional manager can be forwarded automatically, under control of the regional manager, semi-automatically initiated e.g. by a system administrator, in response to a request of the restoration system and the like to download configuration data to restoration system on start-up.

Further, the regional manager provides information characterizing whether paths and links should be restored or not and, optionally, priorities for paths and links.

In the case of a restoration process initiated by the restoration system, the regional manager receives respective information from the restoration system. In response thereto, the regional manager defers requests within the communications environment, e.g. from users or network elements, which have or can have impact on the restoration process. This "passive" operational mode can be maintained until the restoration process is actually finished or up to a point where requests to and respective responses of the regional manager do not interfere with the restoration process. During a restoration process communications from the regional manager to network elements which are affected by restoration can be deferred to avoid impact on the restoration. Further, communications originating from the regional manager can be rejected or negatively acknowledged in the restoration process.

Moreover, in the case of a restoration process, requests already processed by the regional manager but not yet delivered with impact on the restoration process can be postponed until the restoration process is completed or no impact on the restoration process is expected. Such a postponement can be obtained e.g. by storing respective information, queuing requests or returning request rejections together with requests for a request repetition to the requesting party to process the requests anew.

To provide the regional manager a configuration of the environment resulting from a restoration process, upon a completed restoration, the new configuration is communicated to the regional manager to update its database. This can be accomplished upon request from the regional manager in response to an indication of a restoration process, e.g. forwarded by the restoration system, or by a download initiated by the restoration system.

Further, it is contemplated to provide copies of configuration messages from restoration system to network elements during a restoration process to update the database of the regional manager accordingly. Here, the regional manager is capable to distinguish update information and other communications, e.g. requests to the regional manager. Thus, the regional manager should be not in total "passive" operational mode with respect to network elements involved in a restoration process.

Moreover, in the case of a SDH environment, the regional manager can be adapted to supervise path overhead information such as J1 bytes of spare restoration resources. When a link is restored, the regional manager can perform a roll back of restored paths to their respective initial route, which can be (operator) forced or automated. In case connection(s) cannot be established, the regional manager can by provided, e.g. by a DXC, information of paths not restored such that the regional manager is enabled to further operate taking into account the new configuration.

### DESCRIPTION OF DATA STRUCTURES FOR THE RESTORATION SYSTEM

In the following, data structures in form of object classes are presented for a object oriented software implementation of operations and functions of the restoration environment described above.

### I Data structures for the start-up and the re-alignment manager

I.1 STARTUPMANAGER
   StartUpManager **MANAGED OBJECT CLASS**
   **BEHAVIOR**
   StartUpManagerBehaviour
   **ATTRIBUTES**
   Status
   SDHNetwork
   VC4PathList
   **ACTIONS**
   GetConfiguration
I.2 RESTORATION SYSTEM DATABASE OBJECT CLASSES
I.2.1 SDHNETWORK OBJECT CLASS
   SDHNetwork **MANAGED OBJECT CLASS**
   **BEHAVIOR**
   SDHNetworkBehaviour
   **ATTRIBUTES**
   SDHNetworkInformation
   **ACTIONS**
   addPhysicalNode, addPhysicalLink, removePhysical-Node, removePhysicalLink
   **SDHNetworkBehaviour:**
   SDHNetworkInformation:= SEQUENCE { SetOfPhysicalNE, SetOfPhysicalLink, SetOfBackboneAccessPoint}
   SetOfPhysicalNE:== SET OF { NetworkElement}
   SetOfPhysicalLink:== SET OF { Physical-Link}
   SetOfBackboneAccessPoint:== SET OF {BackboneAccessPoint}
I.2.2 NETWORKELEMENT OBJECT CLASS
   NetworkElement **MANAGED OBJECT CLASS**
   **BEHAVIOR**
   NetworkElementBehaviour
   **ATTRIBUTES**
   Status
   SetOfPhysicalLink
   SetOfCrossConnection
   SetOfAvailableAU4TP
   SetOfBackboneAccessPoint
   **ACTIONS**
   Connect, Delete
   **NetworkElementBehaviour:**
   Status:== current network element status
   SetOfPhysicalLink:== physical links to network elements
   SetOfCrossConnection:== cross connections established in network elements
   SetOfAvailableAU4TP:== AU4TP still available to establish cross connections
   SetOfBackboneAccessPoint:== backbone access point TPs where restorable paths enter or leave the backbone network
I.2.3 PHYSICALLINK OBJECT CLASS
   PhysicalLink **MANAGED OBJECT CLASS**
   **BEHAVIOR**
   PhysicalLinkBehaviour
   **ATTRIBUTES**
   Status
   NetworkElement1
   ElOptTPOfNetworkElement1
   NetworkElement2
   ElOptTPOfNetworkElement2
   SET OF { LinkConnection}
   **ACTIONS**
   GetAvailableLinkConnection, ConnectLinkConnection, ReleaseLinkConnection, GetCapacityUsed
   **PhysicalLinkBehaviour:**
   The physical link provides a pool of link connections that can be used for path establishment.
I.2.4 PHYSICALPATH OBJECT CLASS
   PhysicalPath **MANAGED OBJECT CLASS**
   BEHAVIOR
   PhysicalPathBehaviour
   **ATTRIBUTES**
   Status
   PhysicalLinkSequence
   **ACTIONS**
   **PhysicalPathBehaviour:**
   A VC-4 connection in the network is in the first abstraction level defined by a physical path of physical links through the network providing all essential topological information necessary, e.g. information indicative of sequences of physical links. A respective example is shown in Fig. 3.
   PhysicalLinkSequence:== sequence of { PhysicalLink}
I.2.5 ESTABLISHEDVC4PATH OBJECT CLASS
   EstablishedVC4Path **MANAGED OBJECT CLASS**
   **BEHAVIOR**
   EstablishedVC4PathBehaviour
   **ATTRIBUTES**
   Status
   PathToBeRestoredIndication
   PathToBeRestoredPriority
   EstablishedVC4PathLinkConnectionSequence
   RollbackVC4Path
   **ACTIONS**
   **EstablishedVC4PathBehaviour:**
   A VC4 connection is characterized by EstablishedVC4Path containing LinkConnections deployed providing interconnections of TPs in DXCs.
   EstablishedVC4PathLinkConnectionSequence:== SEQUENCE OF {LinkConnection}
I.2.6 ROLLBACKVC4PATH OBJECT CLASS
   RollbackVC4Path **MANAGED OBJECT CLASS**
   **BEHAVIOR**
   RollbackVC4PathBehaviour
   **ATTRIBUTES**
   Status
   RollbackVC4PathLinkConnectionSequence
   **ACTIONS**
   **RollbackVC4PathBehaviour:**
   For roll back functionalities, RollbackVC4Path is maintained containing LinkConnections deployed of the initial configuration.
   RollbackVC4PathLinkConnectionSequence:== SEQUENCE OF { LinkConnection}
I.2.7 LINKCONNECTION OBJECT CLASS
   LinkConnection **MANAGED OBJECT CLASS**
   **BEHAVIOR**
   LinkConnectionBehaviour
   **ATTRIBUTES**
   Status
   PhysicalLink
   AU4TP1
   AU4TP2
   Directionality
   AvailabilityIndication
   **ACTIONS**
   **LinkConnectionBehaviour:**
   LinkConnection is characterized by its TPs, directionality (uni, bi) and AvailabilityIndication (available for interconnections or not available for interconnections).
I.2.8 CROSSCONNECTION OBJECT CLASS
   CrossConnection **MANAGED OBJECT CLASS**
   **BEHAVIOR**
   CrossConnectionBehaviour
   **ATTRIBUTES**
   Status
   NetworkElement
   AU4TP1
   AU4TP2
   Directionality
   **ACTIONS**
   **CrossConnectionBehaviour:**
   CrossConnection is characterized by its TPs and directionality (uni, bi).
I.2.9 TP OBJECT CLASSES
   ElOptTP **MANAGED OBJECT CLASS**
   **BEHAVIOR**
   ElOptTPBehaviour
   **ATTRIBUTES**
   Status
   NetworkElement
   PhysicalLink
   RelatedRSTPSet
   Directionality
   **ACTIONS**
   **ElOptTPBehaviour:**
   NetworkElement indicates network elements where a TP is located.
   PhysicalLink indicates to which physical link a TP is connected.
   RelatedRSTPSet:== SET OF { RSTP}
   RSTP **MANAGED OBJECT CLASS**
   **BEHAVIOR**
   RSTPBehaviour
   **ATTRIBUTES**
   Status
   RelatedElOptTP
   RelatedMSTPSet
   Directionality
   **ACTIONS**
   **RSTPBehaviour:**
   RelatedMSTPSet:== SET OF {MSTP}
   MSTP **MANAGED OBJECT CLASS**
   **BEHAVIOR**
   MSTPBehaviour
   **ATTRIBUTES**
   Status
   RelatedRSTP
   RelatedAU4TPSet
   Directionality
   **ACTIONS**
   **MSTPBehaviour:**
   RelatedAU4TPSet:== SET OF {AU4TP}
   AU4TP **MANAGED OBJECT CLASS**
   **BEHAVIOR**
   AU4TPBehaviour
   **ATTRIBUTES**
   Status
   RelatedMSTP
   CrossConnectionIndication
   RelatedCrossConnection
   LinkConnectionIndication
   RelatedLinkConnection
   Directionality
   **ACTIONS**
   **AU4TPBehaviour:**
   Attributes of an AU4TP object advice to which cross connection and link connection a TP is connected indicated by a corresponding indicator whether the TP is connected at all. These object classes are strongly related as in each level a TP has exactly one related TP in the server layer and one or more related TPs in the client layer (see Fig. 5). As a TP can be uni- or bi-directional, the directionality provides respective information.

### II COMMUNICATIONS MANAGER

CommunicationsManager **MANAGED OBJECT CLASS**
BEHAVIOR
CommunicationsManagerBehaviour
**ATTRIBUTES**
Status
CommunicationsManagerOperationalMode
**NOTIFICATION**
RestorationEvent
RestorationFinalisedEvent
**ACTIONS**
ReceiveRequest, ReceiveNotification, SendRequest, SendNotification
**CommunicationsManagerBehaviour:**
CommunicationsManagerOperationalMode:== CHOICE OF { Normal-Mode, RestorationMode, FinalizationMode}

This mode is time controlled because it is starved off. After time-out the communications manager returns to normal mode.

### III CONFIGURATION MANAGER AND DATABASE

ConfigurationManager **MANAGED OBJECT CLASS**
**BEHAVIOR**
ConfigurationManagerBehaviour
**ATTRIBUTES**
Status
ConfigurationManagerOperationalMode
RestorationInformation
VC4PathToBeRestoredList
RestoredVC4PathList
RestoredPhysicalPathList
CrossConnectInformationSet
**ACTIONS**
ReceiveRequest, ReceiveNotification, Receive Responses
**ConfigurationManagerBehaviour:**
ConfigurationManagerOperationalMode:== CHOICE OF {Normal-Mode, RestorationMode}
VC4PathToBeRestoredList:== SEQUENCE OF { VC4PathToBeRestored}
RestoredVC4PathList:== SET OF {RestoredVC4Path}
CrossConnectInformationSet:== SET OF {CrossConnectInformation}
CrossConnectInformation:== SEQUENCE {NetworkElement, SET OF { CrossConnectionToBeDeleted}, SET OF { CrossConnectionToBeConnected}}

### IV ALARM ANALYZER

AlarmAnalyzer **MANAGED OBJECT CLASS**
**BEHAVIOR**
AlarmAnalyzerBehaviour
**ATTRIBUTES**
Status
RestorationInformation
VC4PathToBeRestoredList
**EVENTS GENERATED**
RestorationEvent

### V NETWORK RESTORER

NetworkRestorer **MANAGED OBJECT CLASS**
**BEHAVIOR**
NetworkRestorerBehaviour
**ATTRIBUTES**
Status
RestorationInformation
VC4PathToBeRestoredList
RestoredPhysicalPathList
UnrestoredVC4PathList
**ACTIONS**
RestoreNetwork
RestoreNetwork **ACTION**
**BEHAVIOR**
Restores the network
**MODE CONFIRMED**
**WITH INFORMATION SYNTAX** RestorationInformation,
VC4PathToBeRestoredList
**WITH REPLY SYNTAX** RestoredPhysicalPathList, UnrestoredVC4PathList
**NetworkRestorerBehaviour:**
RestorationInformation:== SEQUENCE { SDHNetwork, FailedLink-Set}
RestoredPhysicalPathList:== SET OF { PhysicalPath}}
UnrestoredVC4PathList:== SET OF { VC4PathID}
Computation, on the basis of RestorationInformation and VC4PathToBeRestoredList, of the RestoredPhysicalPathList and creation the UnrestoredVC4PathList of path that cannot be restored.

### VI NETWORK ELEMENT COMMANDS GENERATOR

NetworkElementCommandsGenerator **MANAGED OBJECT CLASS**
**BEHAVIOR**
NetworkElementCommandsGeneratorBehavior
**ATTRIBUTES**
Status
NetworkElementCommandsGeneratorOperationalMode
**NOTIFICATIONS**
**ACTIONS**
SendRequest, SendNotification
**NetworkElementCommandsGeneratorBehavior:**
The Network Element Commands Generator generates commands to network elements involved in restoration, e.g. it connects cross connection via connect action (creates objects), disconnects cross connection via disconnect action (deletes objects) and informs configuration manager (for each message send database is updated).

The Network Element Commands Generator generates notifications to regional manager, e.g. CrossConnection releases (notification object deleted), creates corresponding new CrossConnections (notification object created) and informs configuration manager of responses.

## Claims

1. A restoration system for restoring a communications network including a network managing unit for the network, communications paths and network elements for communications via the communications paths, the restoration system comprising:
- a unit being adapted and programmed to detect a failure in the network to be restored by evaluating alarm communications in the network,
- a unit being adapted and programmed to control the network upon detection of a failure, and
- a unit being adapted and programmed to restore failed paths by deploying a restoration configuration for the network, wherein
- the unit for controlling is adapted and programmed to control the network during the restoration and to release control of the network to the network managing unit upon an at least partially completion of the restoration.

2. The restoration system according to Claim 1, comprising
- a unit being adapted and programmed to monitor a current network status on the basis of communications in the network.

3. The restoration system according to Claim 2, wherein
- the monitor unit is adapted and programmed to duplicate communications in the network and to forward monitored communications to a respective destination.

4. The restoration system according to Claim 2 or 3, wherein
- the failure detection unit is adapted and programmed to detect the failure on the basis of communications monitored by the monitoring unit.

5. The restoration system according to one of the preceding Claims, comprising
- a unit being adapted and programmed to retrieve a current configuration of the network from the network managing device, the current configuration being at least indicative of communications paths used.

6. The restoration system according to one of the preceding Claims, wherein
- the restoring unit is adapted and programmed to evaluate the restoration configuration.

7. The restoration system according to Claim 6, wherein
- the restoring unit is adapted and programmed to evaluate the restoration configuration in dependence of the retrieved current network configuration.

8. The restoration system according to one of the preceding Claims, comprising
- a unit being adapted and programmed to communicate the restoration configuration to the network managing unit.

9. A restoration method for restoring a communications network including a network managing unit for controlling the network, communications paths and network elements for communications via the communications paths, the restoration method comprising the steps of:
- detecting a failure in the network to be restored by evaluating alarm communications in the network,
- controlling the network upon the detection of a failure by means of a restoration system, and
- restoring failed paths by deploying a restoration configuration for the network, wherein
- the network is controlled by the restoration system during the restoration and control of the network is released to the network managing unit upon an at least partially completion of the restoration.

10. The restoration method according to Claim 9, comprising
- monitoring a current network status on the basis of communications in the network.

11. The restoration method according to Claim 10, wherein the monitoring step comprises
- duplicating communications in the network and to forward monitored communications to a respective destination.

12. The restoration method according to Claim 10 or 11, comprising
- detecting the failure in the network on the basis of communications monitored by the monitoring unit.

13. The restoration method according to one of the Claims 9 to 12, comprising
- retrieving a current configuration of the network from the network managing device, the current configuration being at least indicative of communications paths used.

14. The restoration method according to one of the Claims 9 to 13, comprising
- evaluating the restoration configuration by means of the restoration system.

15. The restoration method according to Claim 14, comprising
- evaluating the restoration configuration in dependence of the retrieved current network configuration.

16. The restoration method according to one of the Claims 9 to 15, comprising
- communicating the restoration configuration to the network managing unit.

17. A communications network, comprising:
- a network managing unit for controlling the network,
- communications paths,
- network elements being adapted and programmed to communicate via the communications paths, and
- the restoration system according to one of the Claims 1 to 8.

18. The communications network according to Claim 17, wherein
- the network managing unit is adapted and programmed to at least partially release control of the network to the restoration system at least upon an performance of a restoration of the network.

19. The communications network according to Claim 17 or 18, wherein
- the network managing unit is adapted and programmed to control the network on the basis of the restoration configuration at least following a restoration of the network.

20. A computer program product, comprising:
- program code portions for carrying out the steps according to one of the Claims 9 to 16.

21. The computer program product according to Claim 20, stored on a computer readable recording medium.

22. Network restoration device for restoring static paths in a transmission network upon occurrence of a failure, the restoration device comprising:
- means for retrieving an initial configuration of said transmission network from a central network managing device,
- means for tracking the current network status by tapping messages on a communication path between said network managing device and network elements, duplicating said messages, and evaluating them,
- means for detecting a failure to be restored by evaluating alarm messages,
- means for taking over control over the network from said network managing device upon detection of a failure,
- means for evaluating a restoration configuration of said transmission network and for restoring failed paths by deploying said restoration configuration, and
- means for informing said network managing device of the restoration configuration.
